# EUROPEAN PATENT SPECIFICATION

(11) **EP 4 305 484 B1**
(45) Date of publication and mention of the grant of the patent: **29.04.2026**
(21) Application number: 22709327.5
(22) Date of filing: 03.03.2022
(51) Int. Cl.: G02B 21/36, G02B 21/00

(54) **MICROSCOPE SYSTEM AND CORRESPONDING SYSTEM, METHOD AND COMPUTER PROGRAM**
MIKROSKOPISCHES SYSTEM UND ENTSPRECHENDES SYSTEM, VERFAHREN UND COMPUTERPROGRAMM
SYSTÈME DE MICROSCOPE ET SYSTÈME, PROCÉDÉ ET PROGRAMME INFORMATIQUE CORRESPONDANTS

(30) Priority: 09.03.2021 EP 21161508
(43) Date of publication of application: 17.01.2024
(73) Proprietor: Leica Instruments (Singapore) Pte Ltd, Singapore 608924 (SG); Leica Microsystems CMS GmbH, 35578 Wetzlar (DE)
(72) Inventor: SCHWEIZER, Jochen, 86938 Schondorf am Ammersee (DE)
(74) Representative: 2SPL Patentanwälte PartG mbB
(86) International application number: PCT/EP2022/055443
(87) International publication number: WO 2022/189261

(56) References cited:
- US-A1- 2013 070 075
- US-A1- 2014 327 757
- US-A1- 2019 239 731

## Description

### Technical field

Examples relate to a microscope system, such as a surgical microscope system, and to a corresponding system, method and computer program for a microscope system.

### Background

Surgical microscope systems are complex devices that provide a large number of functionalities. These functionalities are often accessible via haptic buttons, such as buttons that are located at handles of the surgical microscope system, or buttons that are arranged on a foot pedal of the surgical microscope system. In some cases, access to the functionality may be provided visually, e.g. via a display and a corresponding input device.

Surgical microscope systems are often equipped to perform imaging in various imaging modes, such as a reflectance imaging mode and one or more different fluorescence imaging modes. Each of the modes enables a unique view on the surgical site, with each mode being suitable for different surgical procedures or different parts of a surgical procedure.

US 2014/327757 A1 discloses that during setup of the microscope a wide-angle viewing area can be displayed in a thumbnail region or separately in a display window in preview mode before viewing the magnified image of the samples under inspection.

US 2013/070075 A1 discloses a magnifying observation apparatus having a live observation mode and an observation condition setting mode as operation modes. The live observation mode is an operation mode for observing a sample S, whereas the observation condition setting mode is an operation mode for setting observation conditions.

### Summary

Various examples of the present disclosure are based on the finding that microscope systems, such as surgical microscope systems, are often capable of providing a multitude of different views on the sample being viewed, such as the surgical site. Apart from different imaging modes being used, image processing may be used to create additional views on the sample, which are suitable for different purposes during the evaluation of the sample or during surgery. However, these different views may remain unused if the user is unable to access the available views. Various aspects of the present disclosure thus provide a concept for the selection of different views on the sample being observed via the microscope via an intuitive user interface, in which preview images are used to illustrate the available views to the surgeon or assistant selecting the respective view.

Various aspects of the present disclosure relate to a system for a microscope system. The system comprises one or more processors and one or more storage devices. The system is configured to obtain imaging sensor data from at least one optical imaging sensor of a microscope of the microscope system. The system is configured to generate a plurality of different preview images based on the imaging sensor data. The plurality of different preview images are continuously updated. The system is configured to obtain a control input signal from an input device of the microscope system. The system is configured to generate a display signal for a display device of the microscope system. The display signal comprises a user interface showing two or more preview images of the plurality of different preview images with a smaller size and a further image with a larger size. The system is configured to control the user interface based on the input signal such that the further image is populated based on a selection of one of the two or more different preview images via the user interface. By generating and showing multiple preview images, the user is made aware of the views that are available from the microscope system, facilitating a selection of a suitable view by the user depending on the operation being performed.

As pointed out above, microscopes are often capable of providing a multitude of different views on the sample being viewed. The preview images may reflect the capabilities provided by the microscope systems, showcasing the wide variety of features provided by modern microscope systems. This variety stems from settings being applied at the microscope system, e.g. regarding an illumination mode being used, a frequency spectrum being used, an illumination being used, post-processing being applied to the imaging sensor data, or combinations thereof. For example, the plurality of preview images may differ with regards to at least one of an imaging mode being used for generating the respective preview image, a frequency spectrum being used for generating the respective preview image, an illumination being used for generating the respective preview image, and post-processing being applied to generate the respective preview image.

A major feature being provided by surgical microscope systems, in particular, relates to the use of different "imaging modes", with the different imaging modes comprising at least a "reflectance imaging mode", in which a white-light image is being generated, and at least one "fluorescence imaging mode", in which an image is generated based on fluorescence emissions being recorded in a pre-defined wavelength band (and based on an illumination of the surgical site using light in a fluorescence excitation wavelength band and a fluorophore being applied at the surgical site). These different imaging modes may also be featured using separate preview images. For example, the plurality of preview images comprise at least one preview image that is based on reflectance imaging and at least one preview image that is based on fluorescence imaging.

There are also a number of post-processing adjustments that can be performed and that lead to different results. For example, the contrast being used to generate the images may vary, giving different types of insights depending on the setting. For example, the plurality of preview images may comprise a preview image with a first lower image contrast and a further preview image with a second higher image contrast.

There are a variety of other settings that can be adjusted, and that lead to different preview images being generated. For example, the plurality of preview images may comprise one or more of at least one preview image that is based on high-dynamic-range imaging, at least one preview image in which reflections have been reduced compared to an unprocessed version of the imaging sensor data, and at least one preview image that is based on multi-spectral imaging.

In some cases, a user may prefer to create a custom setting that is suitable for the type of operations they perform. Accordingly, the plurality of preview images may comprise at least one preview image being generated based on a user-specified setting. The system may be configured to generate the user interface with means for defining the user-specified setting.

In general, the proposed concept is not limited to the imaging sensor data being generated by the main imaging sensors of the microscope. Other imaging sensor data that is obtained from other sources, such as an endoscope or a camera providing a different field of view, may be processed as well, and included in the preview images being generated. For example, the system may be configured to obtain additional imaging sensor data from an external device being coupled with the microscope system. The system may be configured to generate the plurality of preview images further based on the additional imaging sensor data.

A factor that is relevant with regards to the usability of the system relates to the placement of different items within the user interface. To increase the usability, and therefore create a more intuitive user interface, the order in which the preview images are displayed may be tailored to the user. For example, the system may be configured to select the two or more of the plurality of different preview images being initially shown in the user interface based on information on preview images being preferred by a user of the microscope system.

In most cases, not all of the preview images may be visible at the same time within the user interface, e.g. as the user interface contains a limited amount of space for the concurrent display of preview images. Consequently, only a subset of the preview images (that are actually visible) may be generated, omitting preview images that are currently not shown. For example, the system may be configured to include a subset of the plurality of preview images in the user interface. The system may be configured to forego generating the preview images not shown in the user interface.

In general, the generation of the preview images may put a major strain on the system. During general use, one or two of the image variants might be generated at the same time and shown. During configuration, however, a larger number of preview images may be generated, for evaluation by the user of the microscope system. To enable or facilitate the concurrent generation of a larger number of preview images, the quality of the preview images may be decreased. For example, the plurality of preview images may have a lower resolution and/or a lower frame rate than the optical imaging data. Additionally, or alternatively, the plurality of preview images have a lower resolution and/or a lower frame rate than the further image.

During experimentation, a placement of the preview images in a "film strip"-like arrangement has been proven to be intuitive. A movement of the "film strip" is an intuitive movement, that is, for example, known to the user from image album applications on their smartphone. For example, the system may be configured to generate the user interface such that the two or more preview images are shown horizontally adjacent to each other (i.e. in a "film-strip"-like arrangement) within the user interface.

There are various types of input that can be used for controlling the user interface. For example, a touch-based user interface may provide a direct manipulation of the user interface, which is often perceived as being intuitive. Consequently, the control input signal may be obtained from a touch interface of a touch screen of the microscope system. The display signal may be generated for a display of the touch screen. Alternatively or additionally, the control input signal may be obtained from one or more input devices arranged at one or more handles of the microscope system. Such input devices may be used, in case of a surgical microscope system, without the surgeon taking their eyes off the surgical microscope.

In general, the display signal may be provided to various displays of the microscope system. For example, the system may be configured to provide the display signal to one of a display of a touch screen of the microscope system, one or more ocular displays of the microscope system, and a head-mounted display of the microscope system.

Various aspects of the present disclosure relate to a surgical microscope system comprising a microscope, a display device, a control input device and the system presented above.

Various aspects of the present disclosure relate to a method for a microscope system. The method comprises obtaining imaging sensor data from at least one optical imaging sensor of a microscope of the microscope system. The method comprises generating a plurality of different preview images based on the imaging sensor data, the plurality of different preview images being continuously updated. The method comprises obtaining a control input signal from an input device of the microscope system. The method comprises generating a display signal for a display device of the microscope system. The display signal comprises a user interface showing two or more of the plurality of different preview images with a smaller size and a further image with a larger size. The method comprises controlling the user interface based on the input signal such that the further image is populated based on a selection of one of the two or more different preview images via the user interface. Optionally, the method comprises obtaining additional imaging sensor data from an external device being coupled with the microscope system, the plurality of preview images being generated further based on the additional imaging sensor data.

Various aspects of the present disclosure relate to a computer program with a program code for performing the above method.

### Short description of the Figures

Some examples of apparatuses and/or methods will be described in the following by way of example only, and with reference to the accompanying figures, in which
Fig. 1a shows a block diagram of an example of a system for a microscope system;
Fig. 1b shows a schematic diagram of an example of surgical microscope system comprising a system for a microscope system;
Fig. 1c shows a schematic diagram of an example of a user interface;
Fig. 2 shows a flow chart of an example of a method for a microscope system;
Figs. 3a to 3d show schematic diagrams of examples of a user interface; and
Fig. 4 shows a schematic diagram of a system comprising a microscope and a computer system.

### Detailed Description

Various examples will now be described more fully with reference to the accompanying drawings in which some examples are illustrated. In the figures, the thicknesses of lines, layers and/or regions may be exaggerated for clarity.

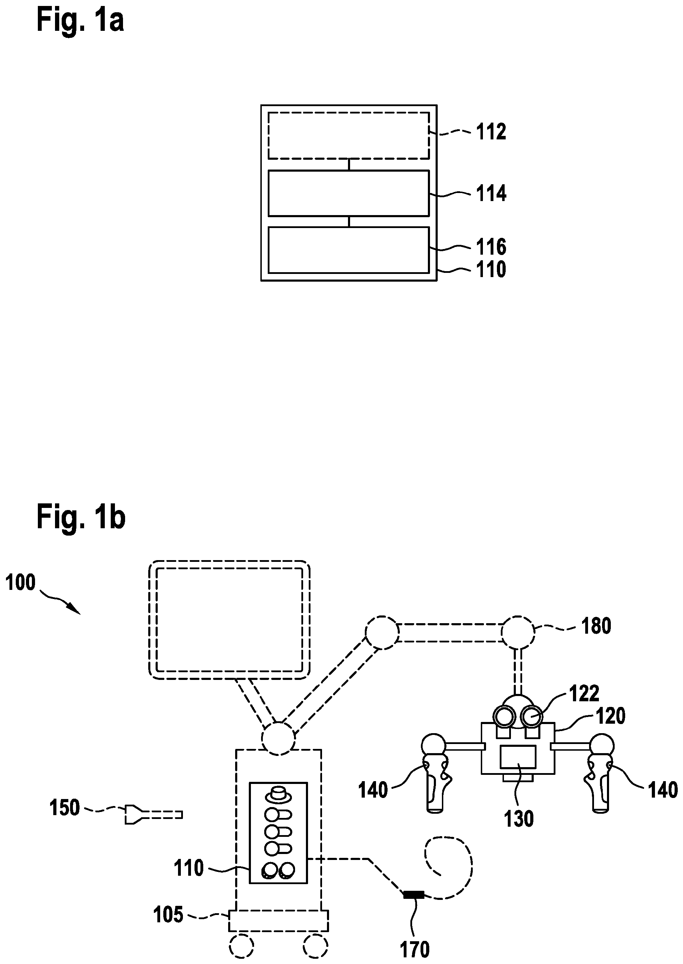

Figs. 1a and 1b show schematic diagrams of an example of a system for a microscope system and of a surgical microscope system comprising such a system. The system 110 comprises one or more processors 114 and one or more storage devices 116. Optionally, the system further comprises one or more interfaces 112. The one or more processors 114 are coupled to the one or more storage devices 116 and to the optional one or more interfaces 112. In general, the functionality of the system is provided by the one or more processors, in conjunction with the one or more interfaces (for exchanging information, e.g. with an optical imaging sensor of a microscope) and/or with the one or more storage devices (for storing and/or retrieving information).

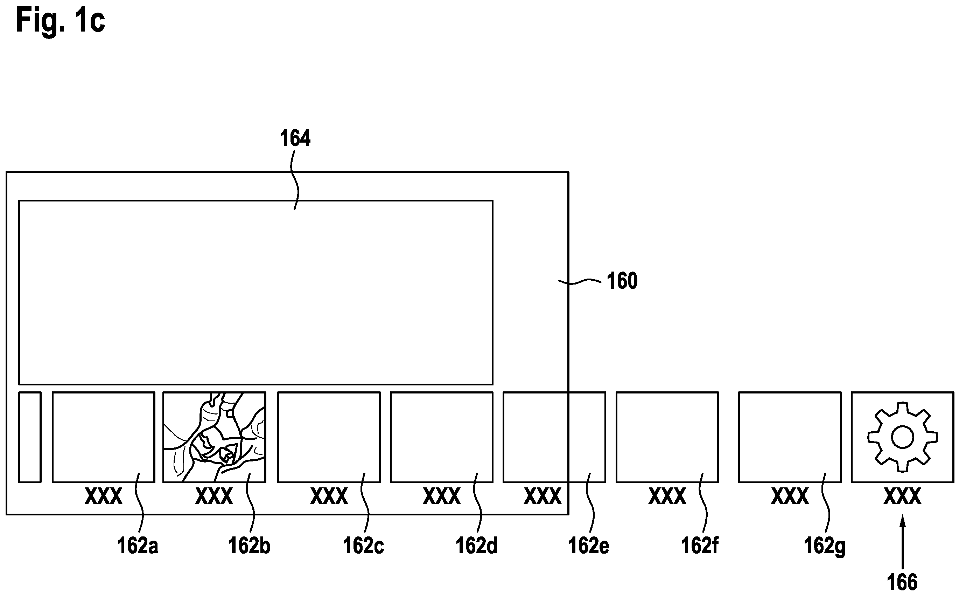

The system is configured to obtain imaging sensor data from at least one optical imaging sensor of a microscope 120 of the microscope system. The system is configured to generate a plurality of different preview images based on the imaging sensor data. The plurality of different preview images are continuously updated. The system is configured to obtain a control input signal from an input device 130; 140 of the microscope system. The system is configured to generate a display signal for a display device 130; 122; 150 of the microscope system. The display signal comprises a user interface 160 (for example shown in Fig. 1c) showing two or more preview images 162 of the plurality of different preview images with a smaller size and a further image 164 with a larger size. The system is configured to control the user interface based on the input signal such that the further image is populated based on a selection of one of the two or more different preview images via the user interface.

Embodiments of the present disclosure relate to a system, method and computer program for a microscope system. In general, a microscope is an optical instrument that is suitable for examining objects that are too small to be examined by the human eye (alone). For example, a microscope may provide an optical magnification of a sample. In modern microscopes, the optical magnification is often provided for a camera or an imaging sensor, such as an optical imaging sensor of the microscope 120 that is shown in Fig. 1b. The microscope 120 may further comprise one or more optical magnification components that are used to magnify a view on the sample, such as an objective (i.e. lens).

There are a variety of different types of microscopes. If the microscope is used in the medical or biological fields, the object being viewed through the microscope may be a sample of organic tissue, e.g. arranged within a petri dish or present in a part of a body of a patient. In the context of the present disclosure, the microscope 120 may be part of a (neuro)surgical microscope system 100, e.g. a microscope to be used during a (neuro)surgical procedure. Such a system is shown in Fig. 1b, for example. Accordingly, an object being viewed through the microscope, and shown in the imaging sensor data, may be a sample of organic tissue of a patient. Although embodiments are described in connection with a microscope, they may also be applied, in a more general manner and not according to the claimed invention, to any optical device.

The above system 110 is suitable for use with the surgical microscope system comprising the microscope 120, e.g. as part of the surgical microscope system 100. Fig. 1b shows a block diagram of the surgical microscope system 100 comprising the system 110, the microscope 120 and a display device 122; 130; 150. The microscope system shown in Fig. 1b is a surgical microscope system. However, the system 110 may be used with other microscope systems. The surgical microscope system 100 shown in Fig. 1b comprises a number of optional components, such as a base unit 105 (comprising the system 110) with a (rolling) stand, a control input device 130; 140, a touch-screen 130, a head-mounted display 150, an endoscope 170, a (robotic or manual) arm 180 which holds the microscope 120 in place, and which is coupled to the base unit 105 and to the microscope 120, and steering handles 140 that are attached to the microscope 120. In some examples, the touch screen 130 may be part of the microscope 120, e.g. as auxiliary display facing the surgeon or facing an assistant. In other words, the touch-screen may be arranged at the microscope of the surgical microscope system. Alternatively, the touch screen 130 may be arranged at the base unit 105 of the microscope system. As further shown in Fig. 1b, the microscope 120 may comprise ocular displays 122. In the context of this application, the term "surgical microscope system" is used, in order to cover the portions of the system that are not part of the actual microscope (which comprises optical components), but which are used in conjunction with the microscope, such as the display or an illumination system.

The system is configured to obtain imaging sensor data from the optical imaging sensor of the microscope. For example, the optical imaging sensor may comprise or be an APS (Active Pixel Sensor) - or a CCD (Charge-Coupled-Device)-based imaging sensor. For example, in APS-based imaging sensors, light is recorded at each pixel using a photo-detector and an active amplifier of the pixel. APS-based imaging sensors are often based on CMOS (Complementary Metal-Oxide-Semiconductor) or S-CMOS (Scientific CMOS) technology. In CCD-based imaging sensors, incoming photons are converted into electron charges at a semiconductor-oxide interface, which are subsequently moved between capacitive bins in the imaging sensors by a control circuitry of the imaging sensors to perform the imaging. In various examples, the optical imaging sensor may comprise two or more individual sensors, e.g. two or more sensors for performing stereoscopic imaging, and/or two or more sensors for recording light in different wavelength bands. The system is configured to obtain (i.e. receive or read out) the imaging sensor data from the optical imaging sensor. The imaging sensor data may be obtained by receiving the imaging sensor data from the optical imaging sensor (e.g. via the interface 112), by reading the imaging sensor data out from a memory of the optical imaging sensor (e.g. via the interface 112), or by reading the imaging sensor data from a storage device 116 of the system 110, e.g. after the imaging sensor data has been written to the storage device 116 by the optical imaging sensor or by another system or processor.

The proposed concept is based on the insight, that a preview of the various types of images that can be generated by the microscope system based on the imaging sensor data can provide an intuitive way for a user to configure the further image, which may subsequently be shown in full-screen mode on the display device. In general, each preview image may represent at least one setting of the microscope system, e.g. a combination of hardware and software settings, that can be used to generate an image to be displayed by the display device of the microscope system. Consequently, the plurality of different preview images may represent a plurality of different settings, or combinations of hardware and software settings, that can be used to generate an image to be displayed by the display device of the microscope system. In general, the user interface may be used to configure the further image. The further image may be shown within the user interface, and additionally, once configured, in full-screen mode on the display device. In other words, the system may be configured to generate the display signal such, that, when the user interface for configuring the further image is hidden, the further image is shown without showing the user interface, e.g. in a full-screen representation. In other words, the further image might not only be shown as part of the user interface, but also as live view on the display device of the microscope system after the user interface is dismissed/hidden.

The plurality of different preview images are generated based on the imaging sensor data. In other words, the plurality of different preview images are based on, e.g. derived from, the imaging sensor data. For example, the preview images may be processed versions of the imaging sensor data. In various examples, the imaging sensor data comprises raw sensor data, which comprises intensity values separately for different wavelength bands being recorded by the optical imaging sensor. In a simple example, in case a Red-Green-Blue (RGB) sensor is used, the imaging sensor data may comprise intensity values separately for a Red wavelength band, a Green wavelength band and a Blue wavelength band (i.e. for light recorded having a wavelength that is encompassed by the respective R/G/B wavelength bands). Alternatively, different wavelength bands may be used, or a larger number of wavelength bands. While some (or all) of the wavelength bands may be used for reflectance imaging (i.e. the recording of light that is reflected off a sample), some may be used for fluorescence imaging (i.e. the recording is light that is emitted by the sample through fluorescence emissions). In other words, the surgical microscope system may be suitable for performing reflectance imaging. Consequently, one or more of the plurality of different preview images may be (or be based on) reflectance images. Additionally, the surgical microscope system may be suitable for performing fluorescence imaging in one or more separate fluorescence emission wavelength bands (or two or more separate fluorescence emission bands). In surgical microscope systems, both reflectance imaging and fluorescence imaging may be used at the same time, to provide a reflectance image (also called "white light" image) with a pseudo-color overlay that is based on the fluorescence emissions. Such a reflectance image with a pseudo-color overlay that is based on the fluorescence emissions may be used to generate another of the plurality of preview images. An image, in which the fluorescence emissions are shown in isolation may be used to generate another of the plurality of preview images. For example, the plurality of preview images may comprise at least one preview image that is based on reflectance imaging and at least one preview image that is based on fluorescence imaging.

Besides reflectance and fluorescence imaging, there are other hardware features that may be used to generate different preview images. For example, the illumination being provided by an illumination system of the microscope system may be adapted to generate different preview images. For example, the illumination may be adapted to generate the different live preview images for different fluorescence imaging modes. For example, the surgical microscope system may be suitable for fluorescence imaging in two different fluorescence imaging modes, which are based on two different fluorescence emission wavelength bands. The fluorescence emissions are caused by fluorophores, with different fluorophores being used to generate the fluorescence emissions in the different fluorescence emission wavelength bands. To excite the fluorophores, light may be emitted in different fluorescence excitation wavelength bands. Therefore, the illumination provided by the illumination may be adapted to emit light in different fluorescence excitation wavelength bands to generate the different preview images of the different fluorescence imaging modes. Another adaptation of the illumination may be performed to generate a preview image in which reflections (or rather highlights) are reduced. In other words, the plurality of different preview images may comprise at least one preview image in which reflections have been reduced compared to an unprocessed version of the imaging sensor data. For example, the reflections may be used by alternating between different illumination settings (e.g. different illumination sources, in case a Light-Emitting-Diode-based illumination is used), and either composing the preview images with reduced reflections from multiple frames that have been recorded with different illumination settings, or by selecting one of the frames that shows fewer reflections than others.

As is evident from the above enumeration, the generation of some of the preview images may be mutually exclusive. For example, it may be infeasible to perform fluorescence imaging in more than one (or more than two) different fluorescence emission wavelength bands and also perform reflectance imaging with a high degree of color accuracy. Therefore, the microscope system may cycle through the different settings, such that the plurality of different preview images are based on the imaging sensor data from different points in time. However, the plurality of different preview images are continuously updated, so the cycle is repeated over and over to update the different preview images. For example, the preview images may be updated at least once every ten seconds (or at least once every five seconds, or at least once every 2 seconds, or at least once every second, or at least once every half-second).

Other types of possible preview images have a stronger focus on post-processing being performed on the imaging sensor data. For example, the plurality of preview images may comprise a preview image with a first lower image contrast and a further preview image with a second higher image contrast, which may be generated by processing the imaging sensor data with different processing settings regarding contrast, illumination and/or color curves. Additionally or alternatively, the plurality of preview images may comprise at least one preview image that is based on high-dynamic-range imaging (which may be generated using exposure bracketing or by generating and combining images that are processed to have different levels of brightness). Additionally or alternatively, the plurality of preview images may comprise at least one preview image that is based on multi-spectral imaging, i.e. at least one preview image that is composed based on a plurality of mutually separate wavelength bands (e.g. from more than three wavelength bands).

In conclusion, the plurality of preview images may differ with regards to at least one of an imaging mode being used for generating the respective preview image, a frequency spectrum being used for generating the respective preview image, an illumination being used for generating the respective preview image, and post-processing being applied to generate the respective preview image. The same imaging sensor data may be processed and used to generate different preview images, which may highlight different aspects of the imaging sensor data.

In some cases, not only the imaging sensor data of the microscope's optical imaging sensor may be used, but also one or more external devices 170, which are coupled to the microscope system (and which may or may not be considered to be part of the microscope system). For example, the system may be configured to obtain additional imaging sensor data from an external device 170 being coupled with the microscope system. The system may be configured to generate the plurality of preview images further based on the additional imaging sensor data. For example, a subset of the plurality of preview images may be based on the imaging sensor data, and another subset of the plurality of preview images may be based on the further imaging sensor data. For example, the external device 170 may be an endoscope (shown in Fig. 1b) or an external camera.

In general, the generation of the preview images may be constrained by the processing capacity of the system, e.g. of the one or more processors of the system. To reduce the processing complexity, various measures may be taken. For example, the preview images may be shown at a smaller size than the further image. Consequently, the plurality of preview images may have a lower resolution than the optical imaging data and/or than the than the further image. Furthermore, the preview images might (only) be used to aid in the selection of a suitable image for the further image. Therefore, in contrast to the further image, a live image might not be required. While the preview images are continuously updated, they may be adapted at a lower frame rate, to allow for multiple preview images being updated. Consequently, the plurality of preview images may have (i.e. be updated with) a lower frame rate than the optical imaging data and/or than the further image.

The system is further configured to generate the display signal with the user interface 160. Fig. 1c shows a schematic diagram of an example of a user interface 160. The user interface comprises / shows the two or more preview images (five preview images 162a-162e in Fig. 1c, plus two 162f-162g that are currently hidden). In Fig. 1c, the preview images are shown in a film-strip-like arrangement, i.e. the preview images are shown in a single row at the bottom of the user interface adjacent to each other. For example, the system may be configured to generate the user interface such that the two or more preview images are shown horizontally adjacent to each other within the user interface, e.g. within a single row. Underneath the preview images, a title or description of the respective preview images are shown (denoted "XXX"). Above the row of preview images, the further image 164 is shown. In general, the further image 164 may be a preview of what is shown when the user interface is hidden / dismissed. Alternatively, the further image 164 may be an excerpt, i.e. a portion, of what is shown when the user interface is hidden / dismissed. In other words, the user interface with the preview images 162 may be shown superimposed on the full version of the further image, with the further image 164 shown in Fig. 1c being an excerpt or portion of the full version of the further image. For example, the further image, or a full version of the further image, may be shown in a full-screen configuration when the user interface is hidden / dismissed. In general, the further image is larger than the individual preview images. For example, the further image may be at least twice as large (horizontally, vertically and/or surface area-wise) as an individual preview image.

As is evident from Fig. 1c, not all preview images might be shown initially within the user interface, e.g. as the available space is limited. Therefore, the selection of the preview images that are shown initially, e.g. when the user interface is loaded, may be of importance. In various examples, the user of the microscope system may mark some of the preview images as favorites - these preview images may be shown with more prominence, e.g. initially when the user interface is loaded. For example, the system may be configured to select the two or more of the plurality of different preview images being initially shown in the user interface based on information on preview images being preferred by a user of the microscope system. For example, the user interface may provide the user with means for select the preview images being preferred. For example, if the user interface is a touch-based user interface, a long press on a preview images may add or remove a preview image to or from the preview images preferred by the user. Alternatively, the system may be configured to log the selection of the preview images, and mark preview images as being preferred by the user based on the number of times they are selected. Furthermore, as indicated by the term "preview images being preferred by a user", the preference of the preview images may be user-specific, e.g. linked with the user being identified towards the microscope system.

In case not all of the preview images are shown at the same time, e.g. as shown in Fig. 1c, the generation of the preview images may be adapted to decrease the computational complexity. For example, the system may be configured to include a subset of the plurality of preview images in the user interface. The system may be configured to forego (e.g. emit or pause) generating the preview images not shown in the user interface. For example, the system might only generate preview images currently being shown. In some cases, the system may also be configured to group preview images together, so they are shown concurrently in the user interface, based on the illumination, imaging mode, or post-processing steps required for generating them, e.g. to avoid displaying preview images at the same time that can only be generated in a mutually exclusive manner.

The display signal is generated for a display device of the microscope system. In Fig. 1b, three different types of display devices are shown - a touch-screen display 130 that is arranged at the microscope, ocular displays 122 of the microscope, and a head-mounted display 150 (e.g. "virtual-reality goggles" or "augmented reality goggles"). Accordingly, the system may be configured to provide the display signal to one of a display of the touch screen 130 of the microscope system, the one or more ocular displays 122 of the microscope system, and the head-mounted display 150 of the microscope system. In general, the display signal may be a signal for driving (e.g. controlling) the display device. For example, the display signal may comprise video data and/or control instructions for driving the display device. For example, the display signal may be provided via one of the one or more interfaces 112 of the system. Accordingly, the system 110 may comprise a video interface 112 that is suitable for providing the video signal to the display device.

The system is configured to obtain a control input signal from an input device 130; 140 of the microscope system. In general, the input device may be any kind of input device, e.g. a touch-screen, haptic buttons or foot pedals, a voice-controlled user interface, or an eye-tracking system etc. In particular, however, two types of input devices have proven to provide an intuitive control of the user interface: touch-based input devices, such as a touch-screen 130, and input devices, such as one or more buttons, one or more knobs, or one or more touch surfaces, that are arranged at the handles 140 of the microscope 120.

For example, the control input signal may be obtained from a touch interface of a touch screen 130 of the microscope system. In this case, the display signal may be generated for a display of the touch screen 130, for example. In this case, the control input signal may represent the touch input obtained via the touch interface. For example, the control input signal may comprise information on one or more coordinates at which a touch input has occurred. The touch input may be used to control the user interface. For example, the system may be configured to control the user interface via the touch input obtained via the touch interface. In general, the system may be configured to locate the touch input (e.g. in coordinates) relative to the user interface, e.g. relative to the preview images, and to control the user interface based on a location of the touch input. For example, the content of a preview image may be selected for the further image by touch-actuating the preview image. Thus, the further image may be selected by a touch-based actuation of the preview image moving the preview image onto the further image.

Alternatively or additionally, the control input signal may be obtained from one or more input devices arranged at one or more handles 140 of the microscope system. For example, in some configurations, the system may support both touch-based input via the touch-screen and input via the one or more input devices arranged at the handles. For example, the one or more input devices may comprise at least one of one or more buttons, one or more rotary knobs, one or more jog dials, one or more four-way controllers and one or more touch surface. For example, the one or more input devices arranged at the handles may be used to switch between the preview images, with the further image being updated based on the selection, or the one or more input devices arranged at the handles may be used to select one of the preview images, with the further image being updated after a confirmation of the selection (e.g. with the selection being performed using one or more first input devices arranged at the handles, and the selection being confirmed using a second (different) input device being arranged at the handles). For example, the further image may be populated by switching between preview images or by selecting and confirming one of the preview images. For example, the left-right directions of the four-way controller may be used to switch between preview images or to select a preview image. The up-direction of the four-way controller may be used to confirm the selection.

In some examples, the system may support the generation of preview images based on user-specified settings. For example, different post-processing steps may be combined to generate a preview image according to a user-specified setting, e.g. by generating a preview image (and corresponding image being used for the further image) with reduced reflections and improved contrast, or a preview image that highlights fluorescence emissions in different wavelength bands, or a preview image in which the color of the pseudo-color representation of the fluorescence emissions is changed, e.g. to another color, or based on other values, such as the temperature of the respective portions of the image. In short, there are numerous variations that may be desired by a user for a specific use-case, but that are not initially included with the microscope, e.g. to avoid overwhelming the user with options. Such user-specified settings may be used to generate one or more of the preview images. For example, the plurality of preview images may comprise at least one preview image being generated based on a user-specified setting. In general, these user-specified settings may be defined at a computer or mobile device, or they may be defined via the user interface itself. For example, the system may be configured to generate the user interface with means 166 for defining the user-specified setting. For example, the user interface may show a setting menu 166 in lieu of a preview image, e.g. at the end of the rows of preview images. For example, the setting menu 166 may be used to define one or more user-specified settings, e.g. by checking check-boxes of filters to apply, and by providing means for manipulating numeric values being used to parametrize the generation of the respective preview images. The user-specified setting may also be used to generate the further image if a preview image that is based on a user-specified setting is selected.

The one or more interfaces 112 may correspond to one or more inputs and/or outputs for receiving and/or transmitting information, which may be in digital (bit) values according to a specified code, within a module, between modules or between modules of different entities. For example, the one or more interfaces 112 may comprise interface circuitry configured to receive and/or transmit information. In embodiments the one or more processors 114 may be implemented using one or more processing units, one or more processing devices, any means for processing, such as a processor, a computer or a programmable hardware component being operable with accordingly adapted software. In other words, the described function of the one or more processors 114 may as well be implemented in software, which is then executed on one or more programmable hardware components. Such hardware components may comprise a general-purpose processor, a Digital Signal Processor (DSP), a micro-controller, etc. In at least some embodiments, the one or more storage devices 116 may comprise at least one element of the group of a computer readable storage medium, such as a magnetic or optical storage medium, e.g. a hard disk drive, a flash memory, Floppy-Disk, Random Access Memory (RAM), Programmable Read Only Memory (PROM), Erasable Programmable Read Only Memory (EPROM), an Electronically Erasable Programmable Read Only Memory (EEPROM), or a network storage.

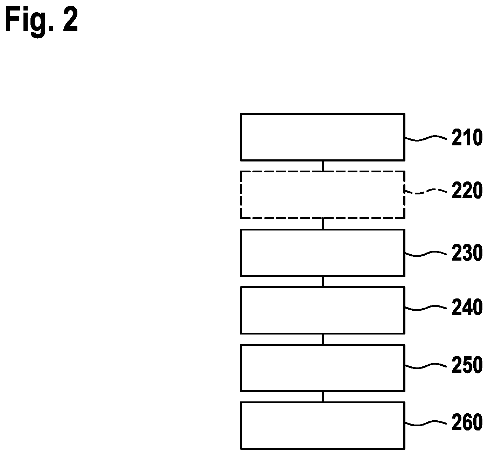

More details and aspects of the system and surgical microscope system are mentioned in connection with the proposed concept or one or more examples described above or below (e.g. Fig. 2 to 4). The system and surgical microscope system may comprise one or more additional optional features corresponding to one or more aspects of the proposed concept or one or more examples described above or below.

Fig. 2 shows a flow chart of an example of a method for a microscope system, e.g. for the surgical microscope system of Figs. 1a to 1c. The method comprises obtaining 210 imaging sensor data from at least one optical imaging sensor of a microscope of the microscope system. The method comprises generating 230 a plurality of different preview images based on the imaging sensor data. The plurality of different preview images are continuously updated. The method comprises obtaining 240 a control input signal from an input device of the microscope system. The method comprises generating 250 a display signal for a display device of the microscope system, the display signal comprising a user interface showing two or more of the plurality of different preview images with a smaller size and a further image with a larger size. The method comprises controlling 260 the user interface based on the input signal such that the further image is populated based on a selection of one of the two or more different preview images via the user interface. Optionally, the method comprises obtaining 220 additional imaging sensor data from an external device being coupled with the microscope system. The plurality of preview images may be generated further based on the additional imaging sensor data.

As indicated above, features described in connection with the system 110, the microscope 120 and the surgical microscope system 100 of Figs. 1a to 1c may be likewise applied to the method of Fig. 2.

More details and aspects of the method are mentioned in connection with the proposed concept or one or more examples described above or below (e.g. Fig. 1a to 1c, 3a to 4). The method may comprise one or more additional optional features corresponding to one or more aspects of the proposed concept or one or more examples described above or below. Various aspects of the present disclosure relate to a live preview mode, which may enable an efficient application of microsurgical device settings.

The proposed concept is based on providing live previews (i.e. continuously updated preview images) to the surgeons, to enable the surgeon to choose settings consisting of (i.e. based on) hardware and software combinations by selecting the live preview image, instead of manually adjusting the settings. The user visually chooses the preview image with the best optical impression for his application. Filters can be the result of controlling camera/illumination settings, hardware/software modules as a fluorescence imaging system, but also image processing functions like contrast enhancements, HDR, brightness settings, color fidelity. The user, e.g. the surgeon, may choose favorite filters that may then be shown in their user settings as favorite filters. The proposed concept may enhance the efficiency and enable the surgeon to get an optimal digital microscope image within a few seconds. Further, the training effort may be reduced as the surgeon might not have to understand the technical settings.

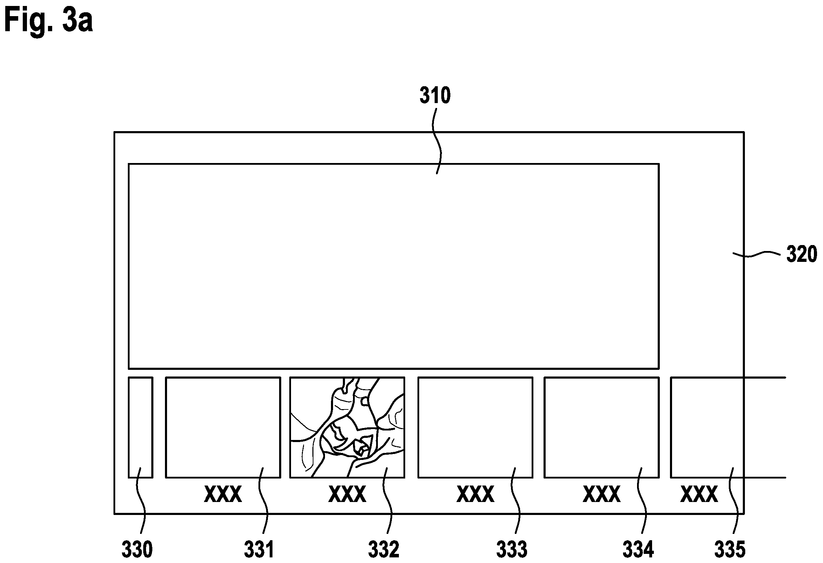

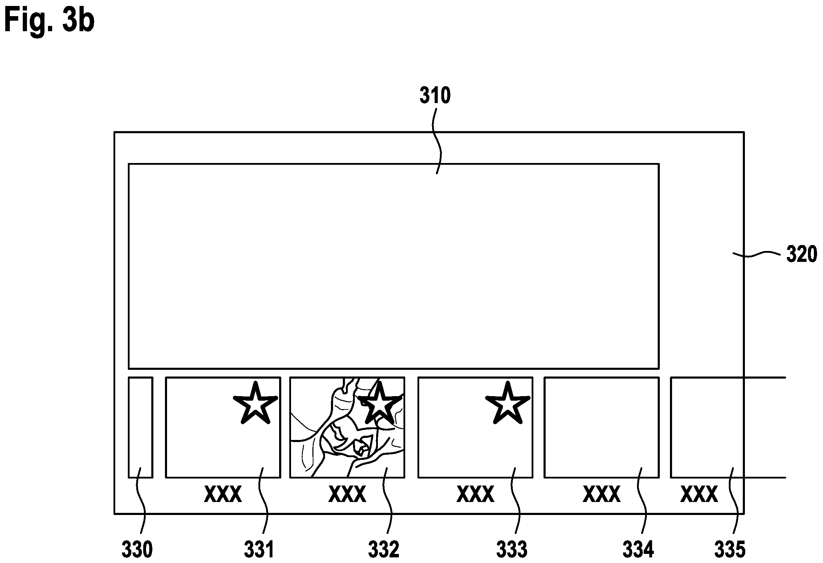

Figs. 3a to 3d show schematic diagrams of examples of a user interface of an "adjust view" screen 320. The user interface comprises a live image 310, e.g. the further image introduced in connection with Figs. 1a to 2. The user interface further comprises a filter preview section 330, which shows different live preview images 331-337 (of which live preview images 331-335 are currently visible) that are shown horizontally adjacent to each other. In some examples, the surgeon can choose favorite filters that will then be shown in their user settings as favorite filters. This is shown in Fig. 3b, where preview images 331, 332 and 333 of the favorite filters are marked with a "star".

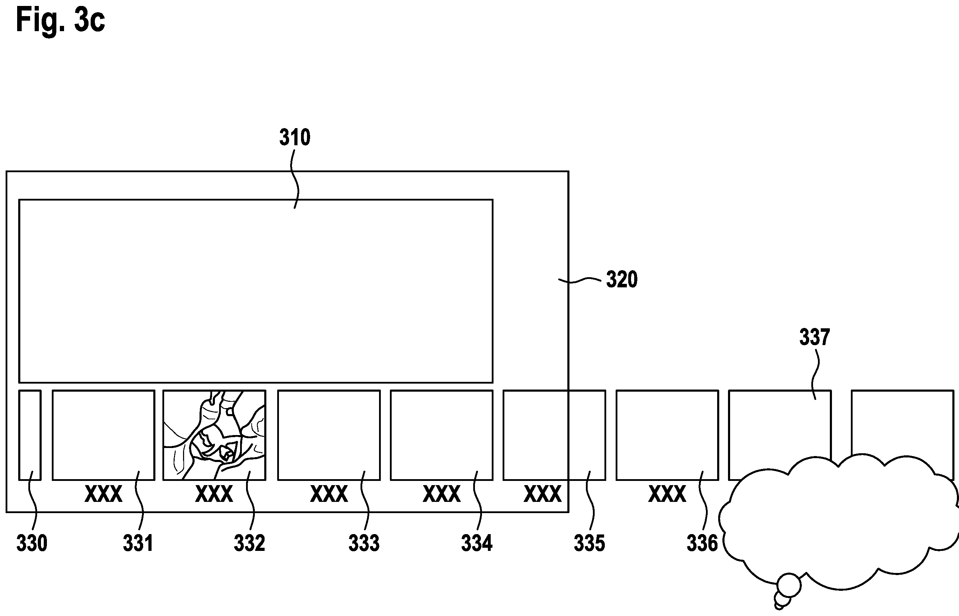

For example, live preview image 331 may show a continuously updated reflectance image overlaid with a pseudo-color representation of fluorescence emissions in a wavelength band around 400 nm, live preview image 332 may show a continuously updated reflectance image overlaid with a pseudo-color representation of fluorescence emissions in a wavelength band around 800 nm, live preview image 333 may show a continuously updated high-dynamic-range (HDR) image, live preview image 334 may show a continuously updated anti-reflection image, live preview image 335 may show a continuously updated pro contrast (i.e. higher contrast) image etc., live preview image 336 may show a continuously updated high color-fidelity image (e.g. with an improved auto-white-balance and/or based on multi-spectral imaging), and live preview image 337 may show a continuously updated image that is re-colored according to a digital filter or re-coloring scheme etc. As indicated by the "cloud" in Fig. 3c, there are a multitude of additional settings/filters that may be offered as preview images.

Below the live preview images, a name or description (XXX in Figs. 3a to 3d) is shown. In Figs. 3a to 3d, only live preview image 332 is shown with an example preview image, however, in general, all of the preview images that are shown may be populated with a continuously updated version.

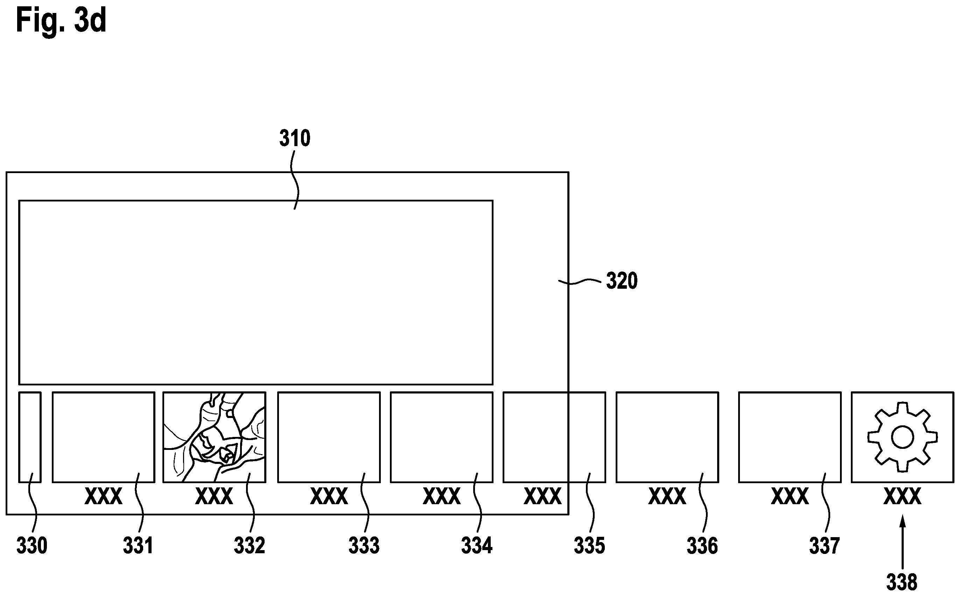

As shown in Fig. 3d, the last preview image 338 may provide a settings dialog in which the surgeon can define custom filters with user-specific names, e.g. CustomNamel(settings), CustomName2(settings) etc.

More details and aspects of the live preview mode and of the user interface are mentioned in connection with the proposed concept or one or more examples described above or below (e.g. Fig. 1a to 2, 4). The live preview mode and of the user interface may comprise one or more additional optional features corresponding to one or more aspects of the proposed concept or one or more examples described above or below.

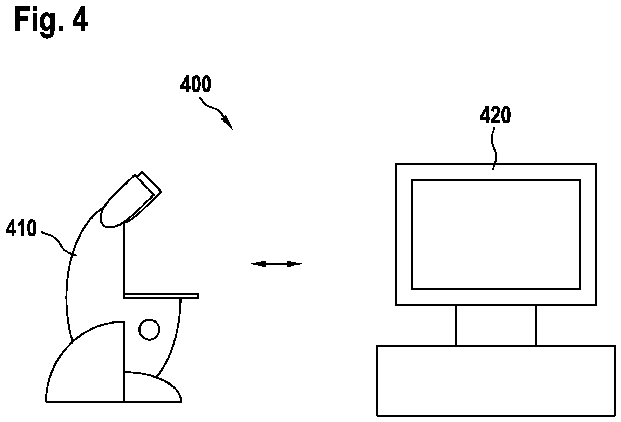

Some embodiments relate to a microscope comprising a system as described in connection with one or more of the Figs. 1 to 3d. Alternatively, a microscope may be part of or connected to a system as described in connection with one or more of the Figs. 1 to 3d. Fig. 4 shows a schematic illustration of a system 400 configured to perform a method described herein. The system 400 comprises a microscope 410 and a computer system 420. The microscope 410 is configured to take images and is connected to the computer system 420. The computer system 420 is configured to execute at least a part of a method described herein. The computer system 420 may be configured to execute a machine learning algorithm. The computer system 420 and microscope 410 may be separate entities but can also be integrated together in one common housing. The computer system 420 may be part of a central processing system of the microscope 410 and/or the computer system 420 may be part of a subcomponent of the microscope 410, such as a sensor, an actor, a camera or an illumination unit, etc. of the microscope 410.

The computer system 420 may be a local computer device (e.g. personal computer, laptop, tablet computer or mobile phone) with one or more processors and one or more storage devices or may be a distributed computer system (e.g. a cloud computing system with one or more processors and one or more storage devices distributed at various locations, for example, at a local client and/or one or more remote server farms and/or data centers). The computer system 420 may comprise any circuit or combination of circuits. In one embodiment, the computer system 420 may include one or more processors which can be of any type. As used herein, processor may mean any type of computational circuit, such as but not limited to a microprocessor, a microcontroller, a complex instruction set computing (CISC) microprocessor, a reduced instruction set computing (RISC) microprocessor, a very long instruction word (VLIW) microprocessor, a graphics processor, a digital signal processor (DSP), multiple core processor, a field programmable gate array (FPGA), for example, of a microscope or a microscope component (e.g. camera) or any other type of processor or processing circuit. Other types of circuits that may be included in the computer system 420 may be a custom circuit, an application-specific integrated circuit (ASlC), or the like, such as, for example, one or more circuits (such as a communication circuit) for use in wireless devices like mobile telephones, tablet computers, laptop computers, two-way radios, and similar electronic systems. The computer system 420 may include one or more storage devices, which may include one or more memory elements suitable to the particular application, such as a main memory in the form of random access memory (RAM), one or more hard drives, and/or one or more drives that handle removable media such as compact disks (CD), flash memory cards, digital video disk (DVD), and the like. The computer system 420 may also include a display device, one or more speakers, and a keyboard and/or controller, which can include a mouse, trackball, touch screen, voice-recognition device, or any other device that permits a system user to input information into and receive information from the computer system 420.

Some or all of the method steps may be executed by (or using) a hardware apparatus, like for example, a processor, a microprocessor, a programmable computer or an electronic circuit. In some embodiments, the method steps may be executed by such an apparatus.

Depending on certain implementation requirements, embodiments of the invention can be implemented in hardware or in software. The implementation can be performed using a non-transitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that the claimed method is performed.

Generally, embodiments of the present invention can be implemented as a computer program product with a program code, the program code being operative for performing the claimed method when the computer program product runs on a computer. The program code may, for example, be stored on a machine readable carrier.

Other embodiments comprise the computer program for performing the claimed method, stored on a machine readable carrier.

In other words, an embodiment of the present invention is, therefore, a computer program having a program code for performing the claimed method, when the computer program runs on a computer.

A further embodiment of the present invention is, therefore, a storage medium (or a data carrier, or a computer-readable medium) comprising, stored thereon, the computer program for performing the claimed method when it is performed by a processor. The data carrier, the digital storage medium or the recorded medium are typically tangible and/or non-transitionary. A further embodiment of the present invention is an apparatus as described herein comprising a processor and the storage medium.

A further embodiment of the invention is, therefore, a data stream or a sequence of signals representing the computer program for performing the claimed method. The data stream or the sequence of signals may, for example, be configured to be transferred via a data communication connection, for example, via the internet.

A further embodiment comprises a processing means, for example, a computer or a programmable logic device, configured to, or adapted to, perform the claimed method.

A further embodiment comprises a computer having installed thereon the computer program for performing the claimed method.

In some embodiments, a programmable logic device (for example, a field programmable gate array) may be used to perform the functionalities of the claimed method. In some embodiments, a field programmable gate array may cooperate with a microprocessor in order to perform the claimed method. Generally, the claimed method is preferably performed by any hardware apparatus.

As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

## Claims

1. A system (110; 420) for a microscope system (100; 400), the system comprising one or more processors (114) and one or more storage devices (116), wherein the system is configured to:
obtain imaging sensor data from at least one optical imaging sensor of a microscope (120; 410) of the microscope system;
generate a plurality of different preview images based on the imaging sensor data, the plurality of different preview images being continuously updated;
obtain a control input signal from an input device (130; 140) of the microscope system;
generate a display signal for a display device (130; 122; 150) of the microscope system, the display signal comprising a user interface (160; 320) showing two or more preview images (162, 331-337) of the plurality of different preview images with a smaller size and a further image (164; 310) with a larger size; and
control the user interface based on the input signal such that the further image is populated based on a selection of one of the two or more different preview images via the user interface.

2. The system according to claim 1, wherein the plurality of preview images differ with regards to at least one of an imaging mode being used for generating the respective preview image, a frequency spectrum being used for generating the respective preview image, an illumination being used for generating the respective preview image, and post-processing being applied to generate the respective preview image.

3. The system according to one of the claims 1 or 2, wherein the plurality of preview images comprise at least one preview image that is based on reflectance imaging and at least one preview image that is based on fluorescence imaging,
and/or wherein the plurality of preview images comprise a preview image with a first lower image contrast and a further preview image with a second higher image contrast.

4. The system according to one of the claims 1 to 3, wherein the plurality of preview images comprise one or more of at least one preview image that is based on high-dynamic-range imaging, at least one preview image in which reflections have been reduced compared to an unprocessed version of the imaging sensor data, and at least one preview image that is based on multi-spectral imaging.

5. The system according to one of the claims 1 to 4, wherein the plurality of preview images comprise at least one preview image being generated based on a user-specified setting, wherein the system is configured to generate the user interface with means (166) for defining the user-specified setting.

6. The system according to one of the claims 1 to 5, wherein the system is configured to obtain additional imaging sensor data from an external device (170) being coupled with the microscope system, the system being configured to generate the plurality of preview images further based on the additional imaging sensor data.

7. The system according to one of the claims 1 to 6, wherein the system is configured to select the two or more of the plurality of different preview images being initially shown in the user interface based on information on preview images being preferred by a user of the microscope system.

8. The system according to one of the claims 1 to 7, wherein the system is configured to include a subset of the plurality of preview images in the user interface, the system being configured to forego generating the preview images not shown in the user interface.

9. The system according to one of the claims 1 to 8, wherein the plurality of preview images have a lower resolution and/or a lower frame rate than the optical imaging data,
and/or wherein the plurality of preview images have a lower resolution and/or a lower frame rate than the further image.

10. The system according to one of the claims 1 to 9, wherein the control input signal is obtained from a touch interface of a touch screen (130) of the microscope system, the display signal being generated for a display of the touch screen (130),
or wherein the control input signal is obtained from one or more input devices arranged at one or more handles (140) of the microscope system.

11. The system according to one of the claims 1 to 10, wherein the system is configured to provide the display signal to one of a display of a touch screen (130) of the microscope system, one or more ocular displays (122) of the microscope system, and a head-mounted display (150) of the microscope system.

12. A surgical microscope system comprising a microscope (120), a display device (130; 122; 150), a control input device (130; 140) and the system (110) according to one of the claims 1 to 11.

13. A method for a microscope system, the method comprising:
obtaining (210) imaging sensor data from at least one optical imaging sensor of a microscope of the microscope system;
generating (230) a plurality of different preview images based on the imaging sensor data, the plurality of different preview images being continuously updated;
obtaining (240) a control input signal from an input device of the microscope system;
generating (250) a display signal for a display device of the microscope system, the display signal comprising a user interface showing two or more of the plurality of different preview images with a smaller size and a further image with a larger size; and
controlling (260) the user interface based on the input signal such that the further image is populated based on a selection of one of the two or more different preview images via the user interface.

14. The method according to claim 13, comprising obtaining (220) additional imaging sensor data from an external device being coupled with the microscope system, the plurality of preview images being generated further based on the additional imaging sensor data.

15. A computer program with a program code for performing the method according to one of the claims 13 or 14 when the computer program is executed on a processor.

## Patentansprüche

1. System (110; 420) für ein mikroskopisches System (100; 400), wobei das System einen oder mehrere Prozessoren (114) und eine oder mehrere Speichervorrichtungen (116) umfasst, wobei das System konfiguriert ist zum:
Erhalten von Bildgebungssensordaten von mindestens einem optischen Bildgebungssensor eines Mikroskops (120; 410) des mikroskopischen Systems;
Erzeugen einer Vielzahl von unterschiedlichen Vorprüfbildern basierend auf den Bildgebungssensordaten, wobei die Vielzahl von unterschiedlichen Vorprüfbildern kontinuierlich aktualisiert werden;
Erhalten eines Steuerungseingabesignals von einer Eingabevorrichtung (130; 140) des mikroskopischen Systems;
Erzeugen eines Anzeigesignals für eine Anzeigevorrichtung (130; 122; 150) des mikroskopischen Systems, wobei das Anzeigesignal eine Benutzeroberfläche (160; 320) umfasst, die zwei oder mehr Vorprüfbilder (162, 331-337) der Vielzahl von unterschiedlichen Vorprüfbildern mit einer kleineren Größe und ein weiteres Bild (164; 310) mit einer größeren Größe zeigen; und
Steuern der Benutzeroberfläche basierend auf dem Eingabesignal, sodass das weitere Bild basierend auf einer Auswahl eines der zwei oder mehr unterschiedlichen Vorprüfbilder über die Benutzeroberfläche befüllt wird.

2. System nach Anspruch 1, wobei die Vielzahl von Vorprüfbildern sich in Bezug auf mindestens eines von einem Bildgebungsmodus, der zum Erzeugen des jeweiligen Vorprüfbilds verwendet wird, einem Frequenzspektrum, das zum Erzeugen des jeweiligen Vorprüfbilds verwendet wird, einer Beleuchtung, die zum Erzeugen des jeweiligen Vorprüfbilds verwendet wird, und einer Nachbearbeitung, die zum Erzeugen des jeweiligen Vorprüfbilds angewendet wird, unterscheiden.

3. System nach einem der Ansprüche 1 oder 2, wobei die Vielzahl von Vorprüfbildern mindestens ein Vorprüfbild, das auf Reflexionsbildgebung basiert, und mindestens ein Vorprüfbild, das auf Fluoreszenzbildgebung basiert, umfassen,
und/oder wobei die Vielzahl von Vorprüfbildern ein Vorprüfbild mit einem ersten geringeren Bildkontrast und ein weiteres Vorprüfbild mit einem zweiten höheren Bildkontrast umfassen.

4. System nach einem der Ansprüche 1 bis 3, wobei die Vielzahl von Vorprüfbildern eines oder mehrere von mindestens einem Vorprüfbild, das auf High-Dynamic-Range-Bildgebung basiert, mindestens einem Vorprüfbild, bei dem Reflexionen im Vergleich zu einer unbearbeiteten Version der Bildgebungssensordaten verringert wurden, und mindestens einem Vorprüfbild, das auf multispektraler Bildgebung basiert, umfassen.

5. System nach einem der Ansprüche 1 bis 4, wobei die Vielzahl von Vorprüfbildern mindestens ein Vorprüfbild umfassen, das basierend auf einer benutzervorgegebenen Einstellung erzeugt wurde, wobei das System konfiguriert ist, um die Benutzeroberfläche mit Mitteln (166) zum Definieren der benutzervorgegebenen Einstellung zu erzeugen.

6. System nach einem der Ansprüche 1 bis 5, wobei das System konfiguriert ist, um zusätzliche Bildgebungssensordaten von einer externen Vorrichtung (170) zu erhalten, die mit dem mikroskopischen System gekoppelt ist, das System konfiguriert ist, um die Vielzahl von Vorprüfbildern weiter basierend auf den zusätzlichen Bildgebungssensordaten zu erzeugen.

7. System nach einem der Ansprüche 1 bis 6, wobei das System konfiguriert ist, um die zwei oder mehr der Vielzahl von unterschiedlichen Vorprüfbildern, die anfangs in der Benutzeroberfläche gezeigt werden, basierend auf Informationen über Vorprüfbilder auszuwählen, die von einem Benutzer des mikroskopischen Systems bevorzugt werden.

8. System nach einem der Ansprüche 1 bis 7, wobei das System konfiguriert ist, um eine Teilmenge der Vielzahl von Vorprüfbildern in der Benutzeroberfläche einzuschließen, wobei das System konfiguriert ist, um Erzeugen der nicht in der Benutzeroberfläche gezeigten Vorprüfbilder zu umgehen.

9. System nach einem der Ansprüche 1 bis 8, wobei die Vielzahl von Vorprüfbildern eine geringere Auflösung und/oder eine geringere Einzelbildrate als die optischen Bildgebungsdaten aufweisen,
und/oder wobei die Vielzahl von Vorprüfbildern eine geringere Auflösung und/oder eine geringere Einzelbildrate als das weitere Bild aufweisen.

10. System nach einem der Ansprüche 1 bis 9, wobei das Steuerungseingabesignal von einer Berührungsoberfläche eines Berührungsbildschirms (130) des mikroskopischen Systems erhalten wird, das Anzeigesignal für eine Anzeige des Berührungsbildschirms (130) erzeugt wird,
oder wobei das Steuerungseingabesignal von einer oder mehreren Eingabevorrichtungen erhalten wird, die an einem oder mehreren Griffen (140) des mikroskopischen Systems angeordnet sind.

11. System nach einem der Ansprüche 1 bis 10, wobei das System konfiguriert ist, um das Anzeigesignal an eine von einer Anzeige eines Berührungsbildschirms (130) des mikroskopischen Systems, einer oder mehreren okularen Anzeigen (122) des mikroskopischen Systems und einer am Kopf angebrachten Anzeige (150) des mikroskopischen Systems bereitzustellen.

12. Chirurgisches mikroskopisches System, umfassend ein Mikroskop (120), eine Anzeigevorrichtung (130; 122; 150), eine Steuerungseingabevorrichtung (130; 140) und das System (110) nach einem der Ansprüche 1 bis 11.

13. Verfahren für ein Mikroskopsystem, wobei das Verfahren umfasst:
Erhalten (210) von Bildgebungssensordaten von mindestens einem optischen Bildgebungssensor eines Mikroskops des mikroskopischen Systems;
Erzeugen (230) einer Vielzahl von unterschiedlichen Vorprüfbildern basierend auf den Bildgebungssensordaten, wobei die Vielzahl von unterschiedlichen Vorprüfbildern kontinuierlich aktualisiert werden;
Erhalten (240) eines Steuerungseingabesignals von einer Eingabevorrichtung des mikroskopischen Systems;
Erzeugen (250) eines Anzeigesignals für eine Anzeigevorrichtung des mikroskopischen Systems, wobei das Anzeigesignal eine Benutzeroberfläche umfasst, die zwei oder mehr der Vielzahl von unterschiedlichen Vorprüfbildern mit einer kleineren Größe und ein weiteres Bild mit einer größeren Größe zeigen; und
Steuern (260) der Benutzeroberfläche basierend auf dem Eingabesignal, sodass das weitere Bild basierend auf einer Auswahl eines der zwei oder mehr unterschiedlichen Vorprüfbilder über die Benutzeroberfläche befüllt wird.

14. Verfahren nach Anspruch 13, umfassend das Erhalten (220) von zusätzlichen Bildgebungssensordaten von einer externen Vorrichtung, die mit dem mikroskopischen System gekoppelt ist, wobei die Vielzahl von Vorprüfbildern weiter basierend auf den zusätzlichen Bildgebungssensordaten erzeugt werden.

15. Computerprogramm mit einem Programmcode zum Durchführen des Verfahrens nach einem der Ansprüche 13 oder 14, wenn das Computerprogramm auf einem Prozessor ausgeführt wird.

## Revendications

1. Système (110 ; 420) pour un système de microscope (100 ; 400), le système comprenant un ou plusieurs processeurs (114) et un ou plusieurs dispositifs de stockage (116), dans lequel le système est configuré pour :
obtenir des données de capteur d'imagerie à partir d'au moins un capteur d'imagerie optique d'un microscope (120 ; 410) du système de microscope ;
générer une pluralité de différentes images de prévisualisation sur la base des données de capteur d'imagerie, la pluralité de différentes images de prévisualisation étant mises à jour en continu ;
obtenir un signal d'entrée de commande à partir d'un dispositif d'entrée (130 ; 140) du système de microscope ;
générer un signal d'affichage pour un dispositif d'affichage (130 ; 122 ; 150) du système de microscope, le signal d'affichage comprenant une interface utilisateur (160 ; 320) montrant deux ou plus images de prévisualisation (162, 331-337) parmi la pluralité de différentes images de prévisualisation d'une taille plus petite et une image supplémentaire (164 ; 310) d'une taille plus grande ; et
commander l'interface utilisateur sur la base du signal d'entrée de sorte que l'image supplémentaire soit chargée sur la base d'une sélection d'une ou des deux ou plus différentes images de prévisualisation par l'intermédiaire de l'interface utilisateur.

2. Système selon la revendication 1, dans lequel la pluralité d'images de prévisualisation diffèrent en ce qui concerne au moins un d'un mode d'imagerie utilisé pour la génération de l'image de prévisualisation respective, un spectre de fréquences est utilisé pour la génération de l'image prévisualisée respective, un éclairage est utilisé pour la génération de l'image de prévisualisation respective, et un post-traitement est appliqué pour générer l'image de prévisualisation respective.

3. Système selon l'une des revendications 1 ou 2, dans lequel la pluralité d'images de prévisualisation comprennent au moins une image de prévisualisation qui est basée sur l'imagerie par réflectance et au moins une image de prévisualisation qui est basée sur l'imagerie par fluorescence,
et/ou dans lequel la pluralité d'images de prévisualisation comprennent une image de prévisualisation avec un premier contraste d'image inférieur et une image de prévisualisation supplémentaire avec un second contraste d'image supérieur.

4. Système selon l'une des revendications 1 à 3, dans lequel la pluralité d'images de prévisualisation comprennent une ou plus d'au moins une image de prévisualisation qui est basée sur l'imagerie à grande gamme dynamique, au moins une image de prévisualisation dans laquelle des réflexions ont été réduites par rapport à une version non traitée des données de capteur d'imagerie, et au moins une image de prévisualisation qui est basée sur l'imagerie multispectrale.

5. Système selon l'une des revendications 1 à 4, dans lequel la pluralité d'images de prévisualisation comprennent au moins une image de prévisualisation générée sur la base d'un réglage spécifié par l'utilisateur, dans lequel le système est configuré pour générer l'interface utilisateur avec des moyens (166) pour définir le réglage spécifié par l'utilisateur.

6. Système selon l'une des revendications 1 à 5, dans lequel le système est configuré pour obtenir des données de capteur d'imagerie supplémentaires à partir d'un dispositif externe (170) couplé avec le système de microscope, le système est configuré pour générer la pluralité d'images de prévisualisation sur la base en outre des données de capteur d'imagerie supplémentaires.

7. Système selon l'une des revendications 1 à 6, dans lequel le système est configuré pour sélectionner les deux ou plus parmi la pluralité de différentes images de prévisualisation initialement affichées dans l'interface utilisateur sur la base d'informations sur des images de prévisualisation préférées par un utilisateur du système de microscope.

8. Système selon l'une des revendications 1 à 7, dans lequel le système est configuré pour inclure un sous-ensemble de la pluralité d'images de prévisualisation dans l'interface utilisateur, le système étant configuré pour assurer la génération des images de prévisualisation non affichées dans l'interface utilisateur.

9. Système selon l'une des revendications 1 à 8, dans lequel la pluralité d'images de prévisualisation présentent une résolution inférieure et/ou une fréquence d'images inférieure aux données d'imagerie optique,
et/ou dans lequel la pluralité d'images de prévisualisation présentent une résolution inférieure et/ou une fréquence d'images inférieure à l'image supplémentaire.

10. Système selon l'une des revendications 1 à 9, dans lequel le signal d'entrée de commande est obtenu à partir d'une interface tactile d'un écran tactile (130) du système de microscope, le signal d'affichage étant généré pour un affichage de l'écran tactile (130),
ou dans lequel le signal d'entrée de commande est obtenu à partir d'un ou de plusieurs dispositifs d'entrée agencés au niveau d'une ou de plusieurs poignées (140) du système de microscope.

11. Système selon l'une des revendications 1 à 10, dans lequel le système est configuré pour fournir le signal d'affichage à un d'un affichage d'un écran tactile (130) du système de microscope, d'un ou de plusieurs affichages oculaires (122) du système de microscope, et d'un visiocasque (150) du système de microscope.

12. Système de microscope chirurgical comprenant un microscope (120), un dispositif d'affichage (130 ; 122 ; 150), un dispositif d'entrée de commande (130 ; 140) et le système (110) selon l'une des revendications 1 à 11.

13. Procédé pour un système de microscope, le procédé comprenant :
l'obtention (210) de données de capteur d'imagerie à partir d'au moins un capteur d'imagerie optique d'un microscope du système de microscope ;
la génération (230) d'une pluralité de différentes images de prévisualisation sur la base des données de capteur d'imagerie, la pluralité de différentes images de prévisualisation étant mises à jour en continu ;
l'obtention (240) d'un signal d'entrée de commande à partir d'un dispositif d'entrée du système de microscope ;
la génération (250) d'un signal d'affichage pour un dispositif d'affichage du système de microscope, le signal d'affichage comprenant une interface utilisateur montrant deux ou plus parmi la pluralité de différentes images de prévisualisation d'une taille plus petite et une image supplémentaire d'une taille plus grande ; et
la commande (260) de l'interface utilisateur sur la base du signal d'entrée de sorte que l'image supplémentaire soit chargée sur la base d'une sélection d'une ou des deux ou plus différentes images de prévisualisation par l'intermédiaire de l'interface utilisateur.

14. Procédé selon la revendication 13, comprenant l'obtention (220) de données de capteur d'imagerie supplémentaires à partir d'un dispositif externe couplé avec le système de microscope, la pluralité d'images de prévisualisation étant générées sur la base en outre des données de capteur d'imagerie supplémentaires.

15. Programme informatique avec un code de programme pour réaliser le procédé selon l'une des revendications 13 ou 14 lorsque le programme informatique est exécuté sur un processeur.
